# EUROPEAN PATENT SPECIFICATION

(11) **EP 1 739 775 B1**
(45) Date of publication and mention of the grant of the patent: **02.11.2011**
(21) Application number: 04723053.7
(22) Date of filing: 24.03.2004
(51) Int. Cl.: H01M 8/04, C09K 5/00

(54) **COOLING FLUID COMPOSITION FOR FUEL CELL**
KÜHLFLUIDZUSAMMENSETZUNG FÜR BRENNSTOFFZELLE
COMPOSITION DE FLUIDE DE REFROIDISSEMENT POUR PILE A COMBUSTIBLE

(43) Date of publication of application: 03.01.2007
(73) Proprietor: Shishiai-Kabushikigaisha, Seki-shi, Gifu 501-3923 (JP)
(72) Inventor: EGAWA, Hiroshi; c/o SHISHIAI-KABUSHIKIGAISHA, Gifu 5013923 (JP); KAGA, Nobuyuki; c/o SHISHIAI-KABUSHIKIGAISHA, Gifu 5013923 (JP)
(74) Representative: Davies, Gregory Mark
(86) International application number: PCT/JP2004/004101
(87) International publication number: WO 2005/091413

(56) References cited:
- EP-A- 1 304 367
- WO-A-03/070854
- WO-A-03/094271
- JP-A- 7 258 871
- JP-A- 8 311 670
- JP-A- 2000 008 027
- JP-A- 2000 038 577
- JP-A- 2001 164 244
- JP-A- 2004 143 191
- MUELLER S. ET AL: 'Leaching of Ions from fuel cell vehicle cooling system and their removal to maintain low conductivity' SPECIAL PUBLICATIONS SOCIETY OF AUTOMOTIVE ENGINEERS 2003, pages 135 - 139, XP002980268

## Description

### Technical Field:

This invention generally relates to a coolant composition for cooling fuel cells, particularly for cooling automotive fuel cells, which is capable of effectively inhibiting oxidation of the base component of the coolant composition and maintaining the electric conductivity of the coolant effectively low enough for a long period of time.

### Background Art:

A fuel cell unit generally comprises a plurality of individual fuel cells arranged in stacks, which generates heat as it generates electric power. In order to cool the stacked fuel cells, a cooling plate is provided among every few fuel cells. Such a cooling plate is provided with a winding coolant path or paths where coolant circulates and cools the adjacent fuel cells.

If the electric conductivity of the coolant, which circulates through the cooling plates within the fuel cell unit, is "high", the electricity generated in the fuel cell unit leaks into the coolant in the coolant paths, detrimentally lowering the efficiency of the fuel cell unit. Accordingly, pure water, which is "low" in electric conductivity and thus highly insulative, has been generally used as coolant for fuel cell units.

However, in the case of a fuel cell unit which is used intermittently, such as an automotive fuel cell unit, or a
fuel cell unit for a cogeneration system for home use, the temperature of coolant circulating in the fuel cell unit falls to or close to the atmospheric temperature when the fuel cell unit is not in use. When the fuel cell unit where pure water is used as coolant is kept at rest for long below the water freezing point, the pure water coolant gets frozen and likely damages the fuel cell unit physically by expansion and deteriorates the performance of the fuel cell unit.

In order to prevent such damages and deterioration, use of a glycol or alcohol as a base component may be considered.

However, a glycol and alcohol when used as a base component of coolant for a fuel cell unit will produce ionic substances in the coolant from oxidation of such a base component, which may be negligible at first, though. The produced ionic substances will eventually accumulate and gradually but steadily raise the electric conductivity of the coolant.

In order to prevent such accumulation of ionic substances, removing the ionic substances by arranging ion exchange resin filters in the coolant paths of a fuel cell system may be considered.

However, ion exchange resin filters are fast degraded through use because the resin is consumed through removal of the ionic substances produced by the oxidation of the base component, quickly losing their effectiveness.

Several heat transfer fluids for use in fuel cell applications have been developed to overcome the above problems. For example, WO 03/070854 discloses a heat transfer composition for use in a fuel cell assembly, said composition comprising: (a) from about 0% to about 90% wt of an alcohol; (b) from about 1% to about 90% wt of a polyalkylene oxide; (c) from about 0% to about 50% wt of an additive; and (d) balance being water. The sugar alcohol sorbitol is one of the preferred alcohols of choice for the first component.

EP1501140 discloses a coolant composition for a fuel cell, comprising a base agent and an anti-corrosive additive that maintains the conductivity of the coolant composition sufficiently low and suppresses oxidation of the base agent or blocks ions from entering the cooling system so as to prevent the conductivity of the coolant composition from increasing, wherein the base agent is selected from water, glycol, alcohols, glycol ethers and mixtures thereof, and the anti-corrosive additive is a phenolic compound or is selected from the group consisting of hydrocarbon carbonyl compound, amide compound, imide compound and diazole compound.

EP1304367 discloses the use of one or a mixture of carboxylic acids or the salts thereof as a coolant concentrate composition in cooling systems where low electrical conductivity is required, such as fuel cell systems. The preferred salts are those of amides- The salts can be used with a liquid alcohol freezing point depressant such as monoethylene glycol. Thiazoles and/or triazoles may be included, as well as other corrosion inhibitors known in the art.

JP2001164244 discloses a coolant used for cooling down a stack of fuel cells, including a solution mixture of water and a glycol as base material and a rust-preventative additive that functions to keep an electric conductivity of the coolant at a low level and to maintain a hydrogen ion exponent of the coolant at a substantially neutral level, wherein the rust-preventative agent includes at least one of an alkaline ethanolamine additive and an acidic additive selected among the group consisting of triazoles, phosphates and organophosphates.

The special publications society of Automotive Engineer 2003 (pages 135-139), discloses a deionised water/ethylene glycol coolant used in automotive fuel cells, wherein the coolant is continuously filtered on an on-board mixed-bed ion exchange resin filter to maintain low conductivity by removing leached or produced ions.

JP8311670 discloses an antifreeze composition containing a water-soluable liquid alcohol and a corrosion inhibitor system comprising a) a mixture of at least two aromatic or aliphatic dicarboxylic acids, or of at least two salts of said acids; b) at least one 1,3-diazole chosen from imidazole, benzimidazole, imidazoline and hydrocarbon derivatives thereof; and c) at least one triazole compound.

JP7258871 discloses a corrosion inhibitor based on a mixture of sorbitol, an alkali metal gluconate and borax, and the use thereof in a closed cooling system containing a coolant such as water. Optionally corrosion inhibitors such as tolyltriazole may also be included.

JP2000038577 discloses a method for reserving heat which comprises a mechanical heat dissipation control method capable of stabilizing the initiation temperature of heat dissipation and stably forming nuclei even when the difference between the melting point of the heat reserving material and the inlet temperature of a heat transfer medium is small. The method for reserving heat comprises a step of effective heat exchange between a latent heat-reserving composition containing a sugar alcohol and a heat transfer medium. The latent heat-reserving material in a supercooled state is irradiated with ultrasonic waves in the heat dissipation step of the latent heat-reserving composition to the heat transfer medium. The latent heat-reserving apparatus includes a heat-reserving vessel housing a latent heat-reserving material composition containing a sugar alcohol and a mechanism for effecting heat exchange between the latent heat-reserving material composition and a heat transfer medium. An ultrasonic wave generator for irradiating the latent heat-reserving material composition in the heat-reserving vessel with ultrasonic waves is also provided.

JP2000008027 discloses a brine composition consisting of an aqueous solution containing 5-40% wt with at least one compound (preferably erythritol) selected from the intramolecular dehydration product of a sugar alcohol (preferably erythritol).

When the erythritan is used as the compound, the content is preferably 15-25 wt%. The composition keeps liquid state even at <= -10°C and is usable as a coolant in a heat-reserve type apparatus constituted so that the coolant may flow around a hermetically sealed capsule having a latent-heat type heat storage material sealed therein.

Accordingly, it is an object of the present invention to provide a coolant composition for fuel cells, which is capable of effectively inhibiting oxidation of the base component of the coolant composition and maintaining the electric conductivity of the coolant effectively low for an expanded period of time.

According to the present invention there is provided a coolant composition for cooling a fuel cell unit, comprising a base component comprised of at least one ingredient selected from the group consisting of alcohols, glycols and glycol ethers for provision of anti-freeze property, and at least one sugar alcohol for provision of an oxidation inhibitive property for inhibiting oxidation of said selected at least one ingredient of said base component, wherein said at least one sugar alcohol is selected from the group consisting of erythritol, xylitol, eorbitol, mannitol, inositol, quercitol, palatinit, lactitol, maltitol, sucrose, raffinose, gentianose, melezitoae, planteose and stachyose, further wherein said glycols are ethylene glycol, diethylene glycol, triethylene glycol, propylene glycol, 1,3-propanediol, 1,3-butaxlediol, 1,5-pentanediol and hexylene glycol.

### Summary of the Invention:

The coolant composition of the present invention is characterized by containing at least one specific sugar alcohol in the base component. The base component of the coolant composition of the present invention has a low electric conductivity and sufficient anti-freezing property. Preferably, the base component of the coolant composition of the present invention comprises at least one component selected from alcohols, glycols and glycol ethers.

Such alcohols may be selected from methanol, ethanol, propanol, butanol, pentanol, hexanol, heptanol and octanol.

Such glycols may be selected from ethylene glycol, diethylene glycol, triethylene glycol, propylene glycol, 1,3-propanediol, 1,3-butanediol, 1,5-pentanediol and hexylene glycol.

Such glycol ethers are selected from ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

The coolant composition of the present further contains at least one specific sugar alcohol in its base component to effectively inhibit oxidation of the base component and prevent the electric conductivity from rising beyond an acceptable level or 10µs/cm in order to maintain the electric power generating capacity of the fuel cell unit above a satisfactory level. The coolant composition of the present invention maintains the electric conductivity within the range oµS/cm - 10µa/cm even after a long use.

Such sugar alcohols may be selected from erythritol, xylitol, sorbitol, mannitol, inositol, quercitol, palatinit, lactitol, maltitol, sucrose, raffinose, gentianose, melezitose, planteose and strachyose. Among them, sorbitol, mannitol and lactitol are especially preferred as they are excellent in oxidation inhibition as well as easy to handle and obtain.

Preferably, at least one sugar alcohol is contained in the base component of the coolant composition of the present invention in the range from 0.1wt.% to 20.0 wt.% of the base component. Efficient oxidation inhibition will not be provided if the content is below this range and waste will result if the content is above this range.

The coolant composition of the present invention may additionally and selectively contain in its base component an amount of a caustic alkali for pH adjusting, dye, antifoaming agent and/or antiseptic, and/or an antirust agent such as a phosphate, nitrate, nitrite, molybdate, tungstate, borate, silicate, sulfate, sulfite, carbonate, amine salt, and triazole within a range that will not adversely affect the electric conductivity of the coolant composition.

### Embodiments:

The present invention is described in more detail below based on preferred embodiments as compared with comparisons. Table 1 shows the components of preferred embodiments 1-3 of the present invention and comparisons 1-5, where embodiment 1 consisted of a base component of ethylene glycol (antifreeze agent) and ion exchange water and sorbitol, embodiment 2 contained mannitol in an identical base component, embodiment 3 contained lactitol in another identical base component, comparison 1 consisted of only a base component of ethylene glycol and ion exchange water, comparison 2 additionally contained glucose in a base component which is identical with comparison 1, comparison 3 additionally contained mannose in a base material which is identical with comparison 1, comparison 4 additionally contained lactose in a base material which is identical with comparison 1, and comparison 5 additionally contained maltose in a base material which is identical with comparison 1, all at the respectively indicated weight proportions.

**Table 1**

| (wt.%) | | | | | | | | |
|---|---|---|---|---|---|---|---|---|
| Component | Emb1 | Emb2 | Emb3 | Cmp1 | Cmp2 | Cmp3 | Cmp4 | Cmp5 |
| ethylene glycol | 50 | 50 | 50 | 50 | 50 | 50 | 50 | 50 |
| ion exchange water | 50 | 50 | 50 | 50 | 50 | 50 | 50 | 50 |
| sorbitol | 5.0 | - | - | - | - | - | - | - |
| mannitol | - | 5.0 | - | - | - | - | - | - |
| lactitol | - | - | 5.0 | - | - | - | - | - |
| glucose | - | - | - | - | 5.0 | - | - | - |
| mannose | - | - | - | - | - | 5.0 | - | - |
| lactose | - | - | - | - | - | - | 5.0 | - |
| maltose | - | - | - | - | - | - | - | 5.0 |

Oxidation deterioration testing (100 °C; 168 hs) was performed on Embodiments 1-3 and Comparisons 1-5, and their post-testing electric conductivities were measured. The result of the measuring is provided in Table 2.

**Table 2**

| (electric conductivity: µs/cm) | | | | | | | | |
|---|---|---|---|---|---|---|---|---|
| Item | Emb1 | Emb2 | Emb3 | Cmp1 | Cmp2 | Cmp3 | Cmp4 | Cmp5 |
| Initial conductivity | 0.4 | 0.3 | 0.2 | 0.2 | 0.3 | 0.4 | 0.4 | 0.3 |
| conductivity after test | 3.3 | 9.7 | 2.7 | 42.6 | 46.3 | 53.5 | 47.2 | 45.6 |

The initial electric conductivities of Embodiments 1-3 and Comparisons 1-5 were all 0.4µs/cm or below. The electric conductivities of Comparisons 1-5 after testing were all 40µs/cm or over, while those of Embodiments 1-3 were all below 10µs/cm.

### Effect of the Invention:

The coolant composition according to the present invention comprises at least one sugar alcohol in its base component which is selected from erythritol, xylitol, sorbitol, mannitol, inositol, quercitol, palatinit, lactitol, maltitol, sucrose, raffinose, gentinose, melezitose, planteose and stachyose so as to effectively inhibit oxidation of the base component and inhibit rise of the electric conductivity of the coolant. Thus, the electric conductivity of the coolant is maintained low for an extended period of time and oxidation is effectively inhibited.

## Claims

1. A coolant composition for cooling a fuel cell unit, comprising a base component comprised of at least one ingredient selected from the group consisting of alcohols, glycols and glycol ethers for provision of anti-freeze property, and at least one sugar alcohol for provision of an oxidation inhibitive property for inhibiting oxidation of said selected at least one ingredient of said base component, wherein said at least one sugar alcohol is selected from the group consisting of erythritol, xylitol, sorbitol, mannitol, inositol, quercitol, palatinit, lactitol, maltitol, sucrose, raffinose, gentianose, melezitose, planteose and stachyose; further wherein said glycols are ethylene glycol, diethylene glycol, triethylene glycol, propylene glycol, 1,3-propanediol, 1,3-butanediol, 1,5-pentanediol and hexylene glycol.

2. The coolant composition of claim 1, wherein said base component comprises at least one component selected from the group consisting of methanol, ethanol, propanol, butanol, pentanol, hexanol, heptanol and octanol.

3. The coolant composition of claim 1 or 2, wherein said glycol ethers are ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

4. The coolant composition of claim 1, wherein said at least one sugar alcohol is contained at o.iwt,% to 20.0 wt.%.

5. The coolant composition of any one of claims 1-4 which maintains the electric conductivity of the coolant at 10µs/cm or below.

## Patentansprüche

1. Kühlmittelzusammensetzung zum Kühlen einer Brennstoffzelleneinheit, mit einer Basiskomponente, die mindestens einen Bestandteil umfasst, der aus der aus Alkoholen, Glycolen und Glycolethern bestehenden Gruppe zur Bereitstellung einer Frostschutzeigenschaft ausgewählt ist, und mindestens einen Zuckeralkohol zur Bereitstellung einer oxidationshemmenden Eigenschaft zum Hemmen der Oxidation des ausgewählten mindestens einen Bestandteils der Basiskomponente, wobei der mindestens eine Zuckeralkohol ausgewählt ist aus der Gruppe bestehend aus Erythrit, Xylit, Sorbit, Mannit, Inositol, Queroitol, Palatinit, Lactit, Maltit, Saccharose, Raffinose, Gentianose, Melicitose, Planteose und Stachyose; wobei es sich ferner bei den genannten Glycolen um Ethylenglycol, Diethylenglycol, Triethylenglycol, Propylenglycol, 1,3-Propandiol, 1,3-Butandiol, 1,5-Pentandiol und Hexylenglycol handelt.

2. Kühlmittelzusammensetzung nach Anspruch 1, wobei die Basiskomponente mindestens eine Komponente umfasst, die ausgewählt ist aus der Gruppe bestehend aus Methanol, Ethanol, Propanol, Butanol, Pentanol, Hexanol, Heptanol und Octanol.

3. Kühlmittelzusammensetzung nach Anspruch 1 oder 2, wobei es sich bei den genannten Glycolethern um Ethylenglycolmonomethylether, Diethylenglycolmonomethylether, Triethylenglycolmonomethylether, Tetraethylenglycolmonomethylether, Ethylenglycolmonoethylether, Diethylenglycolmonoethylether, Triethylenglycolmonoethylether, Tetraethylenglycolmonoethylether, Ethylenglycolmonobutylether, Diethylenglycolmonobutylether, Triethylenglycolmonobutylether und Tetraethylenglycolmonobutylether handelt.

4. Kühlmittelzusammensetzung nach Anspruch 1, wobei der mindestens eine Zuckeralkohol zu 0,1 bis 20,0 Gew.-% enthalten ist.

5. Kühlmittelzusammensetzung nach einem der Ansprüche 1-4, welche die elektrische Leitfähigkeit des Kühlmittels auf 10 µS/cm oder darunter hält.

## Revendications

1. Composition pour fluide de refroidissement destinée à refroidir une unité de pile à combustible, comprenant un composant de base composé d'au moins un ingrédient choisi dans le groupe constitué par les alcools, les glycols et éthers glycoliques pour fournir une propriété antigel, et d'au moins un alcool glucidique pour fournir une propriété d'inhibition de l'oxydation pour inhiber l'oxydation dudit au moins un ingrédient choisi dudit composant de base, dans laquelle ledit au moins un alcool glucidique est choisi dans le groupe constitué par l'érythritol, le xylitol, le sorbitol, le mannitol, l'inositol, le quercitol, le palatinit, le lactitol, le maltitol, le sucrose, le raffinose, le gentianose, le mélézitose, le plantéose et le stachyose; dans laquelle en outre lesdits glycols sont l'éthylène glycol, le diéthylène glycol, le triéthylène glycol, le propylène glycol, le 1,3-propanediol, le 1,3-butanediol, le 1,5-pentanediol et l'hexylène glycol.

2. Composition pour fluide de refroidissement selon la revendication 1, dans laquelle ledit composant de base comprend au moins un composant choisi dans le groupe constitué par le méthanol, l'éthanol, le propanol, le butanol, le pentanol, l'hexanol, l'heptanol et l'octanol.

3. Composition pour fluide de refroidissement selon la revendication 1 ou 2, dans laquelle ledits éthers glycoliques sont l'éther monométhylique d'éthylène glycol, l'éther monométhylique de diéthylène glycol, l'éther monométhylique de triéthylène glycol, l'éther monométhylique de tétraéthylène glycol, l'éther monoéthylique d'éthylène glycol, l'éther monoéthylique de diéthylène glycol, l'éther monoéthylique de triéthylène glycol, l'éther monoéthylique de tétraéthylène glycol, l'éther monobutylique d'éthylène glycol, l'éther monobutylique de diéthylène glycol, l'éther monobutylique de triéthylène glycol et l'éther monobutylique de tétraéthylène glycol.

4. Composition pour fluide de refroidissement selon la revendication 1, dans laquelle ledit au moins un alcool glucidique est contenu dans une quantité de 0,1 % en poids à 20,0 % % en poids.

5. Composition pour fluide de refroidissement selon l'une quelconque des revendications 1 à 4 qui maintient la conductivité électrique du fluide de refroidissement à 10 µS/cm ou en dessous.
